# EUROPÄISCHE PATENTSCHRIFT

(11) **EP 0 675 420 B1**
(45) Veröffentlichungstag und Bekanntmachung des Hinweises auf die Patenterteilung: **02.06.1999**
(21) Anmeldenummer: 95104055.9
(22) Anmeldetag: 20.03.1995
(51) Int. Cl.: G05B 23/02, G09B 19/16

(54) **Überwachungs-Einrichtung zur Überwachung der Flugsicherheit von Flugzeugen**
Monitoring device for monitoring the safety of airplanes
Dispositif de surveillance pour la surveillance de la sécurité des aéronefs

(30) Priorität: 28.03.1994 DE 4410709
(43) Veröffentlichungstag der Anmeldung: 04.10.1995
(73) Patentinhaber: Bodenseewerk Gerätetechnik GmbH, 88662 Überlingen (DE)
(72) Erfinder: Krogmann, Uwe, D-88662 Überlingen (DE)
(74) Vertreter: Wolgast, Rudolf, Dipl.-Chem. Dr.

(56) Entgegenhaltungen:
- EP-A- 0 200 352
- EP-A- 0 416 370
- SCIENTIFIC HONEYWELLER, Bd.9, Nr.1, 1988, MINNEAPOLIS US Seiten 43 - 49 W.SHANEYFELT 'THE HELICOPTER PILOTS EMERGENCY SITUATION ADVISOR'
- CONFERENCE PROCEEDINGS 1991 IEEE INTERNATIONAL CONFERENCE ON SYSTEMS,MAN,AND CYBERNETICS, Bd.3, 13. Oktober 1991, USA Seiten 1511 - 1516 K.KRISHNAKUMAR ET AL 'SIMULATOR BASED ADAPTIVE HELICOPTER TRAINING USING NEURAL NETWORKS'
- CONFERENCE PROCEEDINGS 1991 IEEE INTERNATIONAL CONFERENCE ON SYSTEMS,MAN,AND CYBERNETICS, Bd.3, 13. Oktober 1991, USA Seiten 1545 - 1550 J.SMITH ET AL 'AN ARTIFICIAL NEURAL NETWORK MODEL OF CERTAIN ASPECTS OF FIGHTER PILOT COGNITION'

## Beschreibung

### Technisches Gebiet

Die Erfindung betrifft eine Überwachungs-Einrichtung zur Überwachung der Flugsicherheit von Flugzeugen.

Moderne Flugzeuge sind sehr komplizierte Systeme mit einer Vielzahl von Baugruppen, die in vielfältiger Weise miteinander zusammenwirken. An den Piloten werden daher hohe Anforderungen gestellt, wenn er diese komplexen Systeme beherrschen soll. Der Ausfall einer Baugruppe, z.B. eines Sensors, kann dabei zu gefährlichen Reaktionen führen. Das gleiche kann aber auch für eine falsche Reaktion des Piloten gelten.

### Zugrundeliegender Stand der Technik

Es ist bekannt, im Flugzeug vorhandene Sensoren, Signalverarbeitungs-Kanäle und Stellmotoren redundant vorzusehen. Durch geeignete Redundanzverwaltung kann dafür gesorgt werden, daß bei Ausfall eines Sensors die für Stabilisierung, Führung und Navigation des Flugzeugs erforderlichen Informationen von dem System noch geliefert werden. Ein Beispiel einer solchen Redundanzverwaltung ist in DE-A-39 29 404 und EP-A-0 416 370 dargestellt. Das bekannte System sieht redundante Sensoren in einem Flugzeug selbst vor.

Bekannte Systeme enthalten keine Maßnahmen zur Kontrolle des Piloten.

In der Veröffentlichung von W Shaneyfeld "The Helicopter Pilot's Emergency Situation Advisor" in Scientific Honeyweller, Bd. 9, Nr. 1, 1988, Mineapolis US, Seiten 43 - 49, ist ein Notfall-Beratungssystem für Piloten beschrieben. Durch dieses System werden nicht nur die Flugzeugdaten angezeigt, sondern sie werden auch analysiert und ausgewertet, so daß Empfehlungen für die Reaktionen des Pilotens angezeigt werden können. Die Aufgabe des Systems besteht darin, die Arbeitsbelastung des Piloten in kritischen Situationen zu reduzieren und dadurch die Sicherheit zu erhöhen. Dabei soll die Komplexität der anfallenden Daten reduziert werden und die wichtigsten Informationen hervorgehoben und angezeigt werden, wobei dem Piloten mitgeteilt wird, welche Handlungsmöglichkeiten bestehen. Diese vorgeschlagene Handlungsmöglichkeiten stammen aus Kenntnisse von Pilotenexperten, welche während der Entwicklung des Systems berücksichtigt werden.

### Offenbarung der Erfindung

Der Erfindung liegt die Aufgabe zugrunde, eine Überwachungs-Einrichtung zu schaffen, welche den menschlichen Piloten im Rahmen seiner Flugaufgabe laufend überwacht.

Insbesondere soll eine solche laufende Überwachung bei Ausbildungs- und Trainingsflügen erfolgen.

Erfindungsgemäß wird diese Aufgabe gelöst durch
(a) eine an dem Flugzeug zu befestigende, mit einem technischen Gerät versehene Überwachungs-Baugruppe,
(b) wobei das technische Gerät Sensormittel zur Messung der Flugzeugdaten unabhängig von den flugzeug-eigenen Sensoren enthält,
(c) Mittel zur automatischen Überwachung der Funktion des technischen Geräts der Überwachungs-Baugruppe und
(d) Mittel zur automatischen Überwachung der Reaktionen des Piloten anhand der von den unabhängigen Sensormitteln gelieferten Flugzeugdaten und anhand von über den Datenbus des Flugzeuges erhaltenden Informationen über die Reaktionen des Piloten, wobei diese Reaktionsüberwachungsmittel ebenfalls in der Überwachungs-Baugruppe angeordnet sind.

Es wird somit eine Überwachungs-Einrichtung vorgesehen, die sowohl das eigene technische Gerät als auch den Piloten laufend überwacht. Der Pilot ist ein sehr wichtiges Glied in dem Gesamtsystem.

Die Überwachungs-Einrichtung erzeugt Flugzeugdaten mittels Sensoren, welche von den Sensoren des Flugzeuges selbst unabhängig sind. Es ist daher in keinster Weise notwendig, in das Sensor- und Flugsteuerungssystem des Flugzeuges einzugreifen. Ein solcher Eingriff wäre unzulässig.

Die Überwachungs-Baugruppe kann Warn-Mittel enthalten, die von Flugzeugdaten der unabhängigen Sensoren beaufschlagt sind und auf Abweichungen des Flugzeugs von dem Bereich sicherer Flugzustände ansprechen und ein Warnsignal auslösen.

Weiter kann die Überwachungsbaugruppe Bodenannäherungswarn-Mittel enthalten, die von Flugzeugdaten der unabhängigen Sensoren beaufschlagt sind und auf unzulässige Annäherung des Flugzeugs an den Boden ansprechent und ein Warnsignal auslösen. Gegebenenfalls kann die Überwachungs-Baugruppe Kollisionswarn-Mittel enthalten, die auf die Gefahr einer Kollision mit anderen Flugzeugen ansprechen und ein Warnsignal auslösen.

Die Überwachungs-Einrichtung prüft somit zunächst die Funktion des eigenen technischen Geräts, dann die Reaktionen des Piloten und kann gegebenenfalls auf dieser Basis Abweichungen vom Bereich sicherer Flugzustände und die Gefahr einer Bodenberührung erfassen und signalisieren.

Die Mittel zur Überwachung des technischen Geräts können ein assozatives neuronales Netz mit Ein- und Ausgängen und ein diesem nachgeschaltetes regelbasiertes Expertensystem enthalten, welches als Ausgangsinformation Informationen über die Situation und eine Entscheidung über zu ergreifende Maßnahmen liefert. Das regelbasierte Expertensystem kann ein mit unscharfer Logik arbeitender Assoziativspeicher sein.

Die Mittel zur Überwachung der Reaktionen des Piloten können ein neuronales Netz mit Gewichten enthalten, welches in einem inertialen Zustand trainiert worden ist, um ein Modell des Verhaltens eines Durchschnitts-Piloten als Reaktion auf Sensorsignale zu erzeugen. Dieses neuronale Netz kann im Betrieb den Zustand des Flugzeugs wiedergebende Sensorsignale von den unabhängigen Sensormitteln und die Reaktionen eines realen, menschlichen Piloten wiedergebende Signale empfangen. Dabei wird das neuronale Netz während eines Trainingsverlaufs von dessen inertialen Zustand zu einem Zustand mit veränderten Gewichten umtrainiert, wobei dessen Verhalten das Verhalten des realen, menschlichen Piloten approximiert. Eine adaptive Kenntnis- und Datenbank mit Regeln ist vorgesehen, welche Regeln, welche in einer wenn-dann-Form das Verhalten eines Piloten als Antwort auf Sensorsignale von den unabhängigen Sensormitteln kodieren, in einem Speicher speichern. Die Regeln sind mit Gewichten versehen, welche die Wichtigkeit der Regeln für das Verhalten des Piloten wiedergeben. Es sind Mittel zum Aufschalten der Sensorsignale von den unabhängigen Sensormitteln auf die Kenntnis- und Datenbank vorgesehen sowie Mittel zum Verändern der Gewichte der Kenntnis- und Datenbank schrittweise in Abhängigkeit von Veränderungen der Gewichte des neuronalen Netzes relativ zu dessen inertialen Zustands. Auswertemittel erzeugen ein Maß der Fliegfähigkeit des Piloten aus den veränderten Gewichten der Regeln in der Kenntnis- und Datenbank. Die adaptive Kenntnis- und Datenbank ist ein mit unscharfer Logik arbeitender Assoziativspeicher ist.

Die Überwachungs-Einrichtung kann zusätzlich ein Rechner-Modell der Flugzeugdynamik enthalten, wobei von dem Piloten gegebene Befehle sowohl auf das Flugzeug als auch auf das Modell aufgeschaltet sind, wobei das Rechner-Modell geschätzte Zustandsgrößen des Flugzeuges liefert; wobei die geschätzten Zustandsgrößen des Flugzeuges auch auf die Auswertemittel aufgeschaltet sind. Dadurch wird es möglich, ungewöhnliche Reaktionen des Piloten in der Auswertung zu berücksichtigen, welche durch ungewöhnliches Flugverhalten des Flugzeuges z.B. aufgrund eines Defekts hervorgerufen sein können. In diesem Fall weicht das tatsächliche Verhalten des Flugzeuges von dem Verhalten des Modells ab. Das Rechner-Modell kann ein neuronalen Netz sein, das anhand der vom Piloten gegebenen Befehle und gemessener Zustandsgrößen des Flugzeugs trainiert ist.

Die Überwachungs-Baugruppe und die flugzeugunabhängigen Sensormittel können in einem am Flugzeug angebrachten Außenbehälter untergebracht sein.

Ein Ausführungsbeispiel der Erfindung ist nachstehend unter Bezugnahme auf die zugehörigen Zeichnungen näher erläutert.

### Kurze Beschreibung der Zeichnungen

- Fig.1: veranschaulicht als Diagramm das der Erfindung zugrundeliegende Sicherheits-Konzept.
- Fig.2: zeigt schematisch eine in einem Außenbehälter am Flugzeug angebrachte Überwachungs-Baugruppe.
- Fig.3: zeigt die Struktur eines Überwachungs-Elements zur Überwachung von Sensoren bei einer Überwachungs-Einrichtung der vorliegenden Art.
- Fig.4: ist ein Blockdiagramm einer Überwachungs-Einrichtung für die Überwachung des Piloten.
- Fig.5: veranschaulicht die Überwachung einer Kollisionsgefahr zwischen Flugzeug und Gelände.

### Bevorzugte Ausführungen der Erfindung

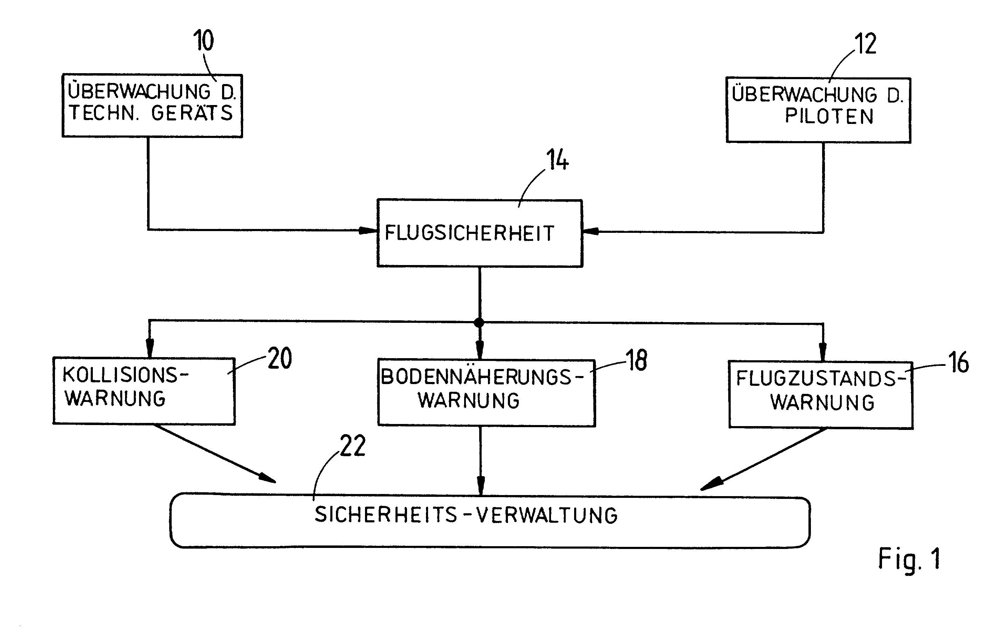

In Fig. 1 repräsentiert der Block 10 die Überwachung des Geräts. Der Block 12 symbolisiert eine Überwachung des Piloten. Das wird unten noch beschrieben. Aus den beiden Überwachungen ergibt sich eine Überwachung der Flugsicherheit insgesamt. Das ist in Fig.1 durch den Block 14 dargestellt.

Auf der Basis dieser Überwachung werden dann weitere Gefahrenpunkte überwacht: Block 16 liefert eine Warnung, wenn das Flugzeug von dem Bereich sicherer Flugzustände abweicht. Block 18 liefert eine Warnung, wenn sich das Flugzeug dem Boden in gefährlicher Weise nähert. Block 20 symbolisiert die Erzeugung eines Kollisionswarnsignals, wenn die Gefahr einer Kollision mit einem anderen Flugzeug besteht.

Insgesamt ergibt sich damit eine "Sicherheits-Verwaltung" des gesamten Systems, wie durch Block 22 in Fig.1 angedeutet ist.

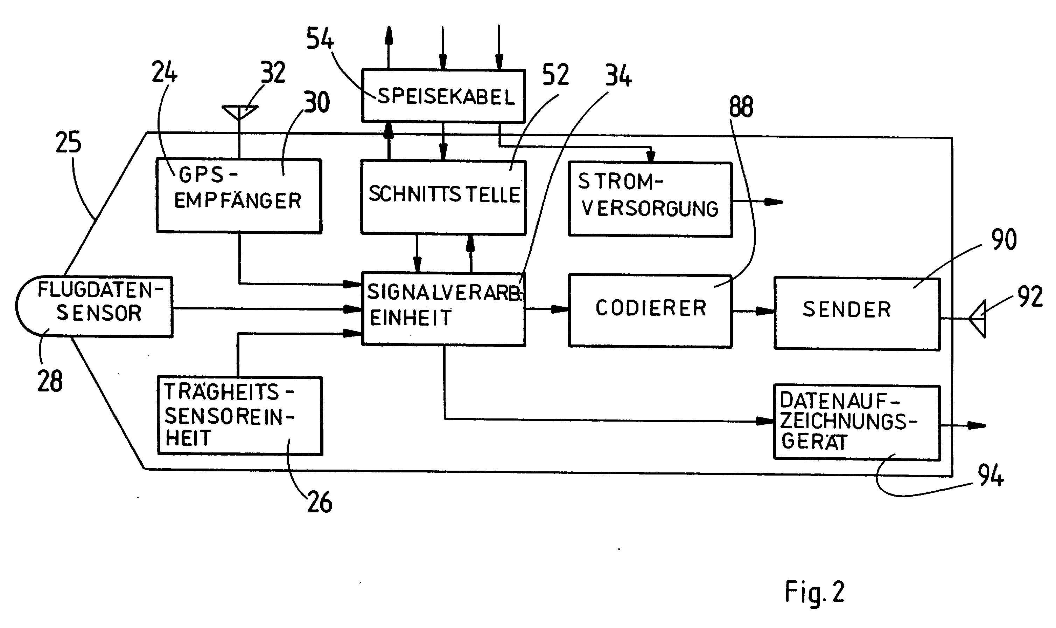

Fig.2 zeigt schematisch eine Überwachungs-Baugruppe 24, die als Außenbehälter (Pod) an ein Kampfflugzeug angehängt wird. Der Außenbehälter 25 hat die Form und das Gewicht eines Flugkörpers, wie er üblicherweise unter den Tragflächen des Kampfflugzeugs angebracht wird. Das hat den Vorteil, daß sich an der Aerodynamik des Flugzeugs im Vergleich zum üblichem Betrieb nichts ändert. Wenn das Flugzeug zum Betrieb mit solchen Flugkörpern zugelassen ist, dann ändert sich an dieser Zulassung durch die Montage eines Außenbehälters 25 statt des Flugkörpers nichts.

Die Überwachungs-Baugruppe 24 enthält Sensoren mit den zugehörigen Signalverarbeitungs-Mitteln, welche die Flugzeugdaten vie Fluglage, Flugdaten (Air Data) und Position redundant erfassen und verarbeiten. Die Sensoren umfassen eine Trägheitssensor-Einheit 26, einen Flugdaten-Sensor 28 und einen Empfänger 30 für die Satellinten-Navigation (GPS) mit der zugehörigen Antenne 32. Die Trägheitssensor-Einheit 26 enthält Kreisel und Beschleunigungsmesser. Es können erforderlichenfalls noch weitere Sensoren, z.B. ein Doppler-Radar oder ein Höhenmesser, vorgesehen werden. Die Sensoren 26, 28 und 30 sind unabhängig von den Sensoren des Flugzeugs selbst. Es ist daher kein Eingriff in das Sensor-System des Flugzeugs selbst erforderlich. Die Überwachungs-Einrichtung kann die Flugzeugdaten, z.B. die Position, Fluglage und Fluggeschwindigkeit oder Anstellwinkel, unabhängig von den Sensoren und Instrumenten des Flugzeugs selbst bestimmen. Die Daten der Sensoren 26, 28 und 30 sind auf eine Signalverarbeitungs-Einheit 34 aufgeschaltet. Die Signalverarbeitungs-Einheit 34 liefert aus den Sensor-Signalen die benötigten Flugzeugdaten. Diese Flugzeugdaten werden redundant erzeugt. Beispielsweise kann die Position des Flugzeugs einmal durch die Trägheitssensor-Einheit 26 durch Signalverarbeitung in der Signalverarbeitungs-Einheit 34 nach den Methoden der Trägheits-Navigation oder durch den Empfänger 30 für die Satelliten-Navigation mit entsprechender Signalverarbeitung erhalten werden. Durch geeignete Redundanz-Verwaltung wird bei Ausfall eines Sensors sichergestellt, daß die erforderlichen Informationen durch Rekonfiguration aus verbleibenden Sensoren erhalten wird.

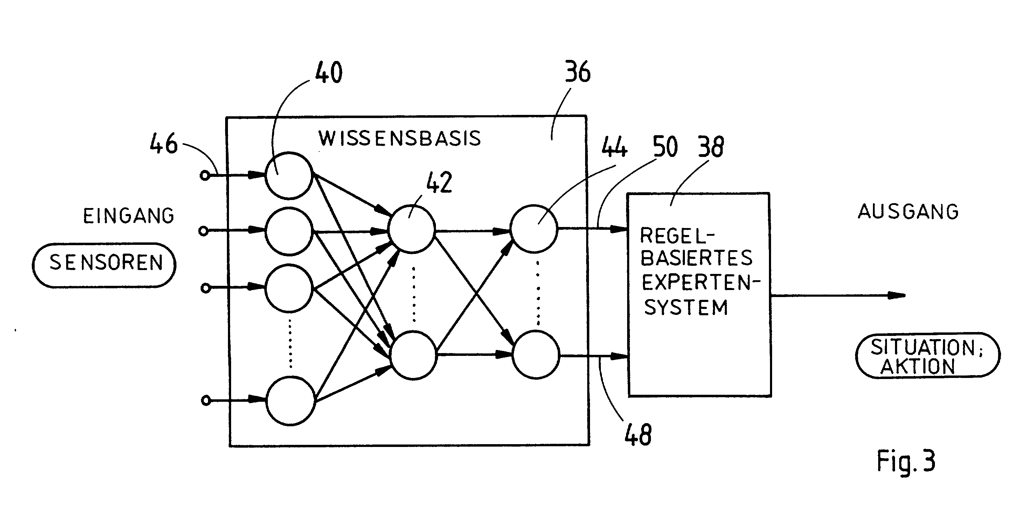

Die Überwachung des "technischen Geräts" geschieht im vorliegenden Fall durch ein neuronales Netz 36 in Verbindung mit einem regelbasierten Expertensystem 38, wie in Fig.3 dargestellt ist.

Das neuronale Netz 36 ist ein dreischichtiges Netz mit einer Eingangsschicht 40, einer verborgenen Schicht 42 und einer Ausgangsschicht 44. Auf die Eingangsschicht 40 sind Eingangsdaten von den Sensoren über Eingänge 46 aufgeschaltet. An Ausgängen 48 wird angegeben, ob ein Sensor defekt ist und welcher. Das neuronale Netz 36 ist dementsprechend durch überwachtes Lernen trainiert, wobei in diesem Lernprozeß die Verbindungsgewichte gesetzt wurden. Die Aktivitäten der Knotenpunkte in der verborgenen Schicht 42 stellen die Klassen der möglichen Ausfälle, Fehler oder Systemdefekte dar. Die Aktivitäten der Knotenpunkte in der Ausgangsschicht stellen die Klassen von vorgeschlagenen Vorgehensweisen dar. Das regelbasierte Expertensystem, das von einem mit unscharfer Logik arbeitenden Assoziativspeicher gebildet ist, erzeugt gegebenenfalls an dessen Ausgängen eine Entscheidung über die zu treffenden Maßnahmen.

Die Einrichtung von Fig.3 kann beispielsweise so arbeiten, daß Meßdaten von allen Sensoren auf die Eingänge des neuronalen Netzes 36 aufgeschaltet sind. Das neuronale Netz 36 liefert ein Signal von im wesentlichen "H" ("high") am ersten Ausgang, wenn ein Sensor z.B. der Empfänger für die Satelliten-Navigation ausfällt. Alle anderen Ausgänge sind im wesentlichen "L" ("low"). Der Ausdruck "im wesentlichen" bedeutet hier, daß die Ausgänge des neuronalen Netzes keine genau definierten Spannungswerte oder Daten liefern, sondern etwas unscharf sind. Das regelbasierte Expertensystem 38 enthält nun abgespeicherte Regeln, üblicherweise in der Form: "Wenn..,dann..". Im vorliegenden, vereinfachten Fall würde das Expertensystem etwa die gespeicherte Regel anwenden: "Wenn Ausgang 50 "hoch" ist (GPS-Empfänger defekt) und alle anderen Ausgänge "niedrig" sind, dann soll die Position aus der Trägheits-Navigation allein bestimmt werden". Das ist die Rekonfiguration. "Hoch" und "niedrig" sind hier unscharfe Größen, die von der unscharfen Logik des Assoziativspeichers verarbeitet werden.

Die beschriebene Überwachungs-Einrichtung für das technische Gerät bildet einen Teil der Signalverarbeitungs-Einheit 34 in Fig.2. Die Überwachungs-Einrichtung von Fig.3 erfüllt die Funktion des Blocks 10 in Fig.1.

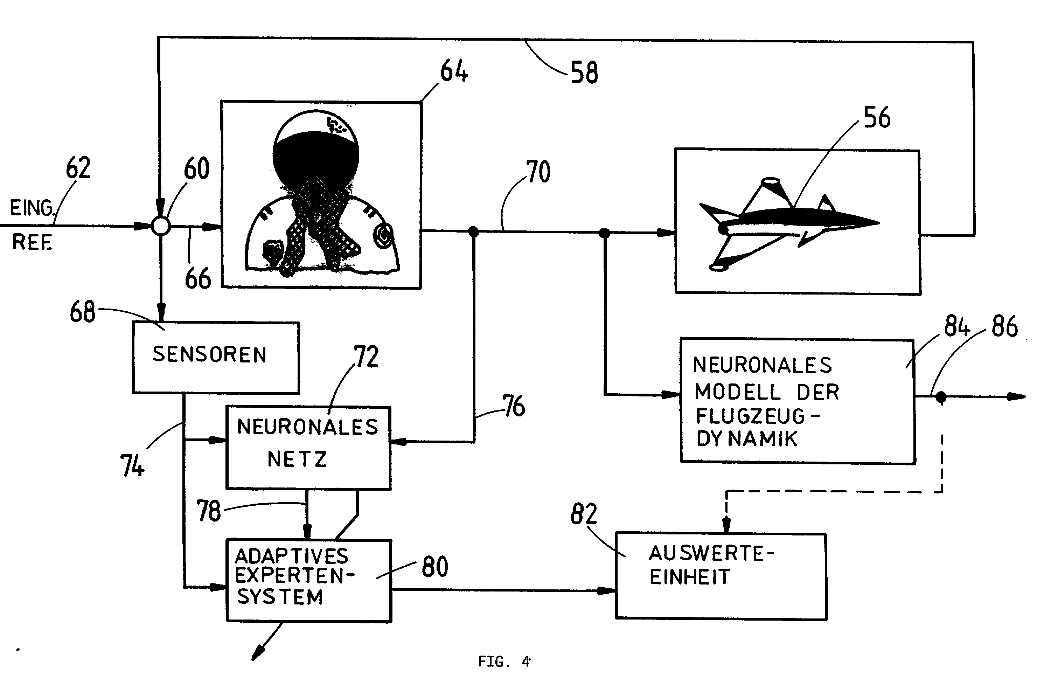

Die Signalverarbeitungs-Einheit 34 ist über eine Schnittstelle 52 und ein Speisekabel (Umbilical) 54 mit dem Datenbus des Flugzeugs verbunden. Über diese Verbindung erhält die Signalverarbeitungs-Einheit 34 die von dem Piloten des Flugzeugs gegebenen Steuerbefehle. Die Signalverarbeitungs-Einheit 34 enthält eine Überwachungs-Einrichtung für die Überwachung des Piloten. Eine solche Überwachungs-Einrichtung ist in Fig.4 dargestellt.

Die Überwachungs-Einrichtung von Fig.4 ist im Prinzip genau so aufgebaut wie die Überwachungs-Einrichtung für das technische Gerät, die in Fig.3 dargestellt ist. Eingangsgrößen sind Größen wie Fluglage, Flugdaten und Position, die sich aus dem Verhalten des Flugzeugs 56 ergeben. Diese Größen sind über Schleife 58 auf den Eingang der Überwachungs-Einrichtung "zurückgeführt" und werden ggf. in einem Summierpunkt 60 mit einer Referenz 62 verglichen. Diese Eingangsgrößen werden einerseits von dem Piloten 64 aufgenommen. Das kann durch Ablesen von Instrumenten, durch visuelle Beobachtung oder z.B. durch das Wahrnehmen von Beschleunigungen geschehen. Das ist durch Pfeil 66 in Fig.4 dargestellt. Andererseits werden die relevanten Größen von den flugzeugunabhängigen Sensoren 26, 28 und 30 im Außenbehälter 24 gemessen. Das ist durch Block 68 in Fig.4 angedeutet. Die Reaktionen des Piloten 64 auf die wahrgenommenen Eingangsgrößen (Pfeil 66) werden von dem Datenbus 70 des Flugzeugs über das Speisekabel 54 abgegriffen und der Signalverarbeitungs-Einheit 34 zugeführt.

Die Signalverarbeitungs-Einheit 34 enthält ein neuronales Netz 72. Auf dieses neuronale Netz 72 sind einmal die Signale der Sensoren 26,28 und 30 (und ggf. anderer, durch Block 68 mit dargestellter Sensoren) aufgeschaltet. Das ist durch die Verbindung 74 angedeutet. Zum anderen erhält das neuronale Netz 72 Informationen über die Reaktionen des Piloten von dem Datenbus des Flugzeugs über das Speisekabel 54 und die Schnittstelle 52 (Fig.2). Das ist durch die Verbindung 76 in Fig.4 dargestellt. Der Ausgang 78 des neuronalen Netzes 72 ist wieder auf ein regelbasiertes Expertensystem 80 aufgeschaltet. Das neuronale Netz 72 und das regelbasierte Expertensystem 80 sind im Prinzip genau so aufgebaut wie das neuronale Netz 36 und Expertensystem 38 von Fig.3.

Durch Training hat das neuronale Netzwerk 72 die Fähigkeit eines "guten" Piloten erlangt und stellt ein "Durchschnitts-Piloten" dar. Das neuronale Netzwerk 72 verknüpft die relative Reaktion des Flugzeugs, wie sie von den Sensoren 68 erfaßt worden sind, mit der Reaktion des Piloten 64. Dies wird durch die an dem neuronalen Netzwerk 72 zeigenden Pfeile angedeutet. Ausgehend von dem ursprünglichen Trainingszustand des neuronalen Netzwerkes 72 wird dieses neuronale Netzwerk 72 durch die Sensorsignale und die Reaktionen des menschlichen Piloten darauf "umtrainiert", wodurch es das Verhalten des realen, menschlichen Piloten approximiert.

Die Kenntnis- und Datenbank 80 enthält Regeln für das Verhalten des Piloten, sozusagen eine "Anweisung für den Piloten". Die Regeln haben die Form " wenn..., dann...". "Wenn diese und jene Sensorsignale auftreten, dann soll der Pilot diese und jene Tätigkeit vornehmen". Die Regeln sind gewichtet. Diese Gewichte hängen davon ab, wie genau der Pilot die betreffende Regel befolgen sollte und dies in der Tat auch macht.

Wenn das neuronale Netzwerk 72 ausgehend von den ursprünglichen Trainingszustand des neuronalen Netzwerkes verändert worden ist und das neuronale Netzwerk 72 dabei das Verhalten des realen, menschlichen Piloten approximiert, dann werden die Gewichte der Regeln in der Kenntnis- und Datenbank 80 gleichzeitig schrittweise verändert. Dies wird durch den durch den diesen Kenntnis- und Datenbank in Fig. 4 darstellenden Block durchgehenden Pfeil dargestellt. Wenn der Pilot beispielsweise eine bestimmte Regel wiederholt mißachtet, dann wird "das Gewicht" dieser Regel in dem System der Regeln in der Kenntnis- und Datenbank 80 relativ zu dem initialen Zustand reduziert. Damit liefern die Veränderungen der Gewichte der verschiedenen Regeln ein Maß für die Fähigkeit des Piloten. Die Erzeugung dieses Maßes wird durch den mit "Auswerteeinheit" beschriebenen Block 82 dargestellt.

Die Verwendung des neuronalen Netzwerkes 72, welches als initialen Zustand durch das Verhalten eines guten Piloten trainiert worden ist, bietet den Vorteil, daß durch den Trainingsverlauf mit dem realen Piloten ein Endzustand sehr schnell erreicht werden kann, in welchem die Gewichte des neuronalen Netzwerkes 72 sich während weiterem Training nur insignifikant verändern. Mit einem initialen Zustand, in welchem die Gewichte des neuronalen Netzwerkes 72 zufällig verteilt sind, würde es zu lange dauern das neuronale Netzwerk zu trainieren. Es kann angenommen werden, daß das Verhalten des zu testenden Piloten sich nicht grundsätzlich von dem eines "guten" Durchschnitts-Piloten unterscheidet. Es ist einfacher das den Durchschnitts-Piloten wiedergebende neuronale Netzwerk an irgendeinem anderen menschlichen Piloten anzupassen als ein untrainiertes neuronales Netzwerk daran anzupassen, welches sozusagen einen Laien darstellen würde.

Das neuronale Netzwerk 72 allein würde kein quantitatives Maß für die Fähigkeit des Piloten liefern. Es wurde auch keine Schlüsse über welche Fehler der Pilot 64 macht erlauben, d.h. in welcher Hinsicht das Verhalten des Piloten 64 von dem eines "Durchschnitts-Piloten" abweicht.

Die Gewichte des neuronalen Netzwerkes werden deswegen in Gewichte definierter Regeln umgeformt, wie in Fig. 4 angedeutet.

Regeln der Kenntnis- und Datenbank 80 kann durch Verändern der Gewichte des neuronalen Netzwerkes variiert werden. Es ist auch möglich, daß neue Regeln erzeugt werden. Es ist bekannt, welche Größen durch die Gewichte des neuronalen Netzwerkes miteinander verknüpft sind. Ein Programm sucht Beziehungen der Form, daß bestimmte Eingänge (Sensorsignale) mit einem bestimmten Ausgang (Reaktion des Piloten) mit besonders großem Gewicht verknüpft sind. Solche große Gewichte haben die Bedeutung, daß wenn die den Eingängen zugeordneten Sensorsignale auftreten, der Pilot besonders oft in Übereinstimmung mit dem Ausgang (oder einer Mehrzahl von Ausgängen) reagiert. Solche Relationen können als eine "wenn..., dann..."-Regel formuliert werden. Das Programm überprüft, ob die neue Regel in der Kenntnis- und Datenbank 80 schon vorhanden ist. Wenn dies nicht der Fall ist, dann wird die neue Regel in der Kenntnis- und Datenbank 80 gespeichert.

Das neuronale Netzwerk 72 erzeugt Ausgangssignale an einem Ausgang 78, welche angeben, in welchem Ausmaß die tatsächlichen Reaktionen des Piloten 64 von denen des Durchschnitts-Piloten abweichen. Bei einer Verringerung der Fluggeschwindigkeit unter einen Sollwert, die von dem Flugdaten-Sensor 28 signalisiert wird, müßte etwa der Schub erhöht oder der Steigflug-Winkel verringert werden. Jeder Pilot wird auf eine gegebene Situation jedoch etwas anders reagieren. Deshalb sind die Beurteilungs-Kriterien unscharf. Linguistische Kriterien wie "gute Übereinstimmung", "leidliche Übereinstimmung" und "schlechte Übereinstimmung" werden für die verschiedenen Reaktionen verwendet.

Die Kenntnis- und Datenbank 80 erhält auch die Signale von den Sensoren 68. Die Kenntnis- und Datenbank "kennt" also die Flugzeugzustände. Von dem neuronalen Netzwerk 72 erhält die Kenntnis- und Datenbank 80 Beurteilungs-Kriterien, die sich lediglich auf den Grad der Übereinstimmung des realen, menschlichen Piloten 64 mit einem Durchschnitts-Piloten abstellen. Der Spielraum, der für das Verhalten des Piloten existiert, ist jedoch für die verschiedenen Reaktionen unterschiedlich groß. Dieser Spielraum hängt vielfach von dem Flugzeugzustand ab. Ein Pilot, der bei einer Abweichung der vom Flugdaten-Sensor 28 gemessenen Fluggeschwindigkeit von einem Sollwert nicht sofort den Schub erhöht, reagiert u.U. vernünftig, wenn sich die Fluggeschwindigkeit sicher oberhalb der Abreißgeschwindigkeit bewegt und der Abfall der gemessenen Fluggeschwindigkeit nur auf einen vorübergehenden Gegenwind zurückzuführen ist. In anderen Fällen kann schon eine geringe Abweichung von der "Norm" gefährlich werden. In anderen Fällen kann es alternative Reaktionen geben. Diese verschiedenen Gesichtspunkte werden in Form von Regeln in der Kenntnis- und Datenbank berücksichtigt, welche sowohl die Kriterien von dem neuronalen Netzwerk 72 und die Sensorsignale von den Sensoren 68 beinhalten.

Die Kenntnis- und Datenbank 80 ist einen mit unscharfer Logik arbeitenden Assoziativspeicher.

In Abhängigkeit von den von dem neuronalen Netzwerk 72 durch den Ausgang 78 erhaltenen Beurteilungs-Kriterien, werden die Gewichte der in der Kenntnis- und Datenbank 80 gespeicherten Regeln schrittweise verändert. Diese Veränderungen liefern "Noten" für die verschiedenen Aspekte des Pilotentrainings. Diese "Noten" sind wieder linguistischer Natur, etwa "Reaktionen schnell", "Reaktionen normal", "Reaktionen langsam" usw. Aus diesen linguistischen "Noten", die von der Kenntnis- und Datenbank 80 erteilt werden, bildet die Auswerteeinheit 82 ein Maß für den Ausbildungsstand des Piloten.

Es wird bei diesem Verfahren sowohl das unterbewußte Verhalten des Piloten überwacht als auch bewußte Handlungen.

Es kann sein, daß bei einem Flugzeug einmal ein von der Norm abweichendes Verhalten des Piloten erforderlich ist, etwa weil die Aerodynamik eines Flugzeugs sich verändert hat oder ein Triebwerk ausgefallen ist. Um das zu erkennen ist ein Rechner-Modell 84 der Flugzeugdynamik vorgesehen. Dieses Modell 84 der Flugzeugdynamik erhält die gleichen Befehle von dem Datenbus 70 wie das Flugzeug 56 selbst. Das Modell 84 liefert an einem Ausgang 86 Schätzwerte der Flugzeug-Zustände. Diese Schätzwerte setzen ein intaktes Flugzeug voraus. Die Schätzwerte sind auf die Auswerteeinheit aufgeschaltet. Die Auswerteeinheit erkennt Abweichungen zwischen den Schätzwerten und dem durch die Sensoren 68 erfaßten realen Verhalten des Flugzeugs. Das Rechner-Modell des Flugzeugs, das ja in hohem Grade nichtlinear ist, wird durch ein neuronales Netz erhalten. Dieses neuronale Netz ist anhand des Verhaltens eines realen Flugzeugs trainiert worden.

Die von der Signalverarbeitungs-Einheit 34 gelieferten Daten werden durch einen Codierer 88 verschlüsselt und von einem Sender 90 mit einer Antenne 92 gesendet. Das gilt auch für Daten, die von verschiedenen Sensoren geliefert werden. Die Daten werden auch auf ein Daten-Aufzeichnungsgerät 93 aufgeschaltet und können von diesem auf einen externen Speicher übertragen werden.

Mit den so überwachten Daten der verschiedenen von den Sensoren des Flugzeugs unabhängigen Sensoren erfolgt eine Überwachung des Flugzeugs darauf, ob sich die Flugzustände innerhalb eines sicheren Bereiches befinden. Der Außenbehälter 24 enthält hierzu eine Vorrichtung, die von Flugzeugdaten der unabhängigen Sensoren 26, 28, 30 beaufschlagt ist und auf Abweichungen des Flugzeugs von dem Bereich sicherer Flugzustände anspricht und einen Alarm auslöst. Das ist die in Fig.1 durch Block 16 dargestellte Funktion.

Kritisch, insbesondere bei Luftkampfübungen, ist die Gefahr einer Kollision zwischen den beteiligten Flugzeugen. Um solche Kollisionen zu vermeiden sind alle beteiligten Flugzeuge mit einem Außenbehälter der beschriebenen Art versehen. Jeder dieser Außenbehälter 25 enthält einen Sensor für die Satelliten-Navigation. Diese Satelliten-Navigation gestattet es, die Position eines Flugzeugs bis auf wenige Meter genau zu bestimmen. Die Trägheitssensor-Einheit liefert den Geschwindigkeits-Vektor im Raum, also praktisch über Grund. Die Daten der verschiedenen Flugzeuge werden über den Sender 90 und die Antenne 92 ausgesandt und drahtlos an alle anderen beteiligten Flugzeuge übertragen. Jede Überwachungs-Baugruppe 24 erhält daher Informationen nicht nur über seine eigene Position, Flugrichtung und Fluggeschwindigkeit sondern auch über die entsprechenden Daten aller anderen beteiligten Flugzeuge. Aus diesen Informationen kann durch die Signalverarbeitungs-Einheit berechnet werden, ob für zwei der beteiligten Flugzeuge die Gefahr einer Kollision besteht. Eine solche Gefahr ist gegeben, wenn die Flugzeuge auf einem Kollisionskurs fliegen, also bei den gemessenen Fluggeschwindigkeiten und Flugrichtungen ausgehend von den gegenwärtigen Positionen den gleichen Punkt im Raum oder einen bestimmten Bereich zur gleichen Zeit erreichen würden, und wenn dabei ein gewisser Abstand zwischen den Flugzeugen unterschritten ist. In diesem Fall wird durch die Überwachungs-Einrichtung ein akustisches Alarmsignal an die Piloten abgegeben. Das ist die durch Block 20 in Fig.1 dargestellte Funktion.

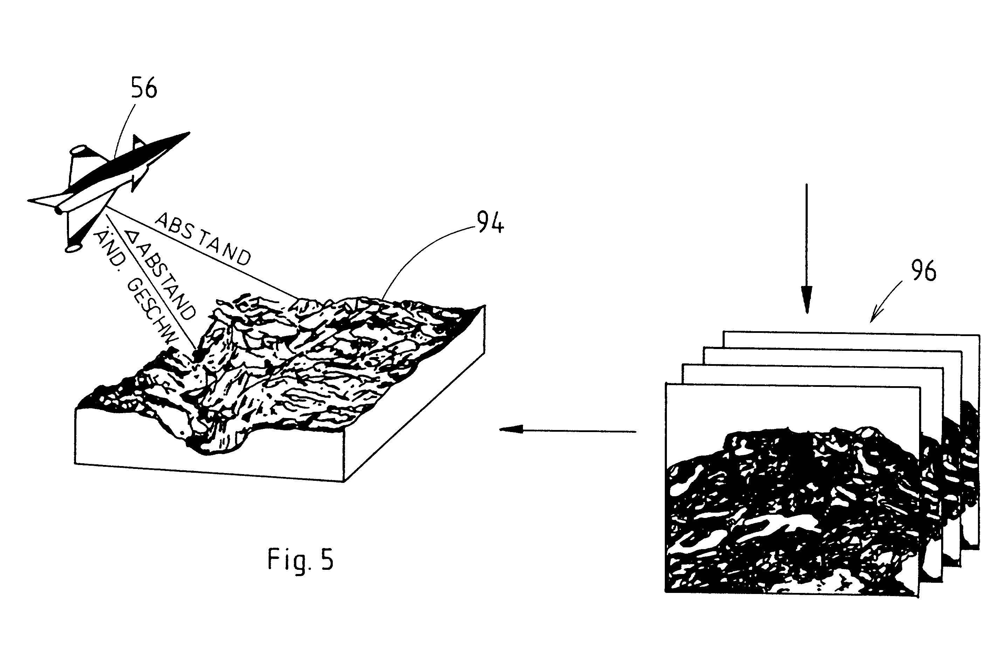

Die Überwachungs-Baugruppe in dem Außenkörper 25 enthält weiter eine Einrichtung, die von Flugzeugdaten der unabhängigen Sensoren beaufschlagt ist und auf unzulässige Annäherung des Flugzeugs an den Boden anspricht und ein Alarm auslöst. Diese Einrichtung geht davon aus, daß sich die Übung über bekanntem Gelände 94 (Fig.5) abspielt. Die Geländestruktur dieses Geländes 94 ist in einem Speicher 96 gespeichert, wie in Fig.5 schematisch angedeutet ist. Durch den Empfänger 30 für die Satelliten-Navigation ist die Position des Flugzeugs 56 im Raum bekannt. Daraus kann die Position des Flugzeugs relativ zu dem Gelände 94 bestimmt werden. Die Trägheitssensor-Einheit 26 liefert darüber hinaus den Geschwindigkeits-Vektor des Flugzeugs über Grund. Daraus kann die Signalverarbeitungs-Einheit 34 berechnen, ob die Gefahr einer Kollision des Flugzeugs mit dem Boden besteht und ein Alarm auslösen. Das ist die in Fig.1 durch Block 18 dargestellte Funktion.

## Patentansprüche

1. Überwachungs-Einrichtung zur Überwachung der Flugsicherheit eines mit flugzeugeigenen Sensoren zur Messung von Flugzeugdaten versehenen Flugzeugs, enthaltend
(a) eine an dem Flugzeug zu befestigende, mit einem technischen Gerät versehene Überwachungs-Baugruppe (24),
(b) wobei das technische Gerät Sensormittel (26,28,30) zur Messung der Flugzeugdaten unabhängig von den flugzeug-eigenen Sensoren enthält,
(c) Mittel (36,38) zur automatischen Überwachung der Funktion des technischen Geräts der Überwachungs-Baugruppe (24) und
(d) Mittel (72,80) zur automatischen Überwachung der Reaktionen des Piloten (64) anhand der von den unabhängigen Sensormitteln (26,28,30) gelieferten Flugzeugdaten und anhand von über den Datenbus des Flugzeuges erhaltenden Informationen über die Reaktionen des Piloten, wobei diese Reaktionsüberwachungsmittel (72,80) ebenfalls in der Überwachungs-Baugruppe (24) angeordnet sind.

2. Überwachungs-Einrichtung nach Anspruch 1, **dadurch gekennzeichnet, daß** die Überwachungs-Baugruppe (24) Warn-Mittel enthält, die von Flugzeugdaten der unabhängigen Sensoren beaufschlagt sind und auf Abweichungen des Flugzeugs von dem Bereich sicherer Flugzustände ansprechen und ein Warnsignal auslösen.

3. Überwachungs-Einrichtung nach Anspruch 1 oder 2, **dadurch gekennzeichnet, daß** die Überwachungsbaugruppe Bodenkontaktwarn-Mittel enthält, die von Flugzeugdaten der unabhängigen Sensoren beaufschlagt sind und auf unzulässige Annäherung des Flugzeugs an den Boden ansprechen und ein Warnsignal auslösen.

4. Überwachungs-Einrichtung nach einem der Ansprüche 1 bis 3, **dadurch gekennzeichnet, daß** die Überwachungs-Baugruppe (24) Kollisionswarn-Mittel enthält, die auf die Gefahr einer Kollision mit anderen Flugzeugen ansprechen und ein Warnsignal auslösen.

5. Überwachungs-Einrichtung nach einem der Ansprüche 1 bis 6, **dadurch gekennzeichnet, daß** die Mittel zur Überwachung des technischen Geräts ein assozatives neuronales Netz (36) mit Ein- und Ausgängen und ein diesem nachgeschaltetes regelbasiertes Expertensystem (38) enthalten, welches als Ausgangsinformation Informationen über die Situation und eine Entscheidung über zu ergreifende Maßnahmen liefert.

6. Überwachungs-Einrichtung nach Anspruch 5, **dadurch gekennzeichnet, daß** das regelbasierte Expertensystem (38) ein mit unscharfer Logik arbeitender Assoziativspeicher ist.

7. Überwachungs-Einrichtung nach einem der Ansprüche 1 bis 6, **dadurch gekennzeichnet, daß** die Mittel (64) zur Überwachung der Reaktionen des Piloten
(a) ein neuronales Netz mit Gewichten enthalten, welches
- in einem inertialen Zustand trainiert worden ist, um ein Modell des Verhaltens eines Durchschnitts-Piloten als Reaktion auf Sensorsignale zu erzeugen, und
- im Betrieb den Zustand des Flugzeugs wiedergebende Sensorsignale von den unabhängigen Sensormitteln und die Reaktionen eines realen, menschlichen Piloten wiedergebende Signale empfängt, wobei das neuronale Netz während eines Trainingsverlaufs von dessen inertialen Zustand zu einem Zustand mit veränderten Gewichten umtrainiert wird, wobei dessen Verhalten das Verhalten des realen, menschlichen Piloten approximiert, sowie
(b) eine adaptive Kenntnis- und Datenbank mit Regeln, welche
- Regeln, welche in einer wenn-dann-Form das Verhalten eines Piloten als Antwort auf Sensorsignale von den unabhängigen Sensormitteln kodieren, in einem Speicher speichern,
- wobei die Regeln mit Gewichten versehen sind, welche die Wichtigkeit der Regeln für das Verhalten des Piloten wiedergeben,
(c) Mittel zum Aufschalten der Sensorsignale von den unabhängigen Sensormitteln auf die Kenntnis- und Datenbank,
(d) Mittel zum Verändern der Gewichte der Kenntnis- und Datenbank schrittweise in Abhängigkeit von Veränderungen der Gewichte des neuronalen Netzes relativ zu dessen inertialen Zustands, und
(e) Auswertemittel zum Erzeugen eines Maßes der Fliegfähigkeit des Piloten aus den veränderten Gewichten der Regeln in der Kenntnis- und Datenbank.

8. Überwachungs-Einrichtung nach Anspruch 7, **dadurch gekennzeichnet, daß** die adaptive Kenntnis- und Datenbank ein mit unscharfer Logik arbeitender Assoziativspeicher ist.

9. Überwachungs-Einrichtung nach Anspruch 7, **gekennzeichnet durch** ein Rechner-Modell (84) der Flugzeugdynamik, wobei von dem Piloten gegebene Befehle sowohl auf das Flugzeug als auch auf das Modell aufgeschaltet sind, wobei das Rechner-Modell (84) geschätzte Zustandsgrößen des Flugzeuges liefert; wobei die geschätzten Zustandsgrößen des Flugzeuges auch auf die Auswertemittel aufgeschaltet sind.

10. Überwachungs-Einrichtung nach Anspruch 9, **dadurch gekennzeichnet, daß** das Rechner-Modell (84) von einem neuronalen Netz gebildet ist, das anhand der vom Piloten gegebenen Befehle und gemessener Zustandsgrößen des Flugzeugs trainiert ist.

11. Überwachungs-Einrichtung nach einem der Ansprüche 1 bis 11, **dadurch gekennzeichnet, daß** die Überwachungs-Baugruppe (24) und die flugzeugunabhängigen Sensormitteln (26,28,30) in einem am Flugzeug (56) angebrachten Außenbehälter (25) untergebracht sind.

## Claims

1. Monitoring device for the monitoring of the flight safety of an aircraft provided with on-aircraft sensors for the measurement of aircraft data comprising
(a) a monitoring component (24) provided with a technical device and adapted to be attached to the aircraft,
(b) the technical device comprising sensor means (26,28,30) for the measurement of the aircraft data independently of the sensors of the aircraft itself,
(c) means (36,38) for the automatic monitoring of the function of the technical device of the monitoring component (24) and
(d) means (72,80) for the automatic monitoring of the reactions of the pilot using the aircraft data provided by the independent sensor means (26,28,30) and using the information about the reactions of the pilots received via the data bus of the aircraft, these reaction monitoring means (72,80) also being arranged in the monitoring component (24).

2. Monitoring device according to claim 1, **characterised in that,** the monitoring component (24) comprises a warning means to which aircraft data from the independent sensors are applied and which respond to deviations of the aircraft from the range of safe flight conditions and trigger a warning signal.

3. Monitoring device according to claim 1 or 2, **characterised in that,** the monitoring component comprises ground contact warning means to which aircraft data from independent sensors are applied and which respond to the aircraft inadmissibly approaching the ground and trigger a warning signal.

4. Monitoring device according to one of the claims 1 to 3, **characterised in that,** the monitoring component (24) comprises collision warning means which responds t the danger of a collision with other aircraft and trigger a warning signal.

5. Monitoring device according to one of the claims 1 to 6, **characterised in that,** the means for the monitoring of the technical device comprises an associative neural network (36) with inputs and outputs and a rule based expert system (38) to which the outputs of the network are applied and which provides information about the situation and a decision about measures to be taken as output information.

6. Monitoring device according to claim 5, **characterised in that,** the rule based expert system (38) is an associative memory operating with fuzzy logic.

7. Monitoring device according to one of the claims 1 to 6, **characterised in that,** the means (64) for the monitoring of the reaction of the pilot
(a) comprises a neural network with weights, which
- has been trained in an inertial condition to generate a model of the behaviour of an average pilot as reactions to sensor signals.
- in operation, receives sensor signals from the independent sensor means reflecting the condition of the aircraft and signals reflecting the reactions of a real, human pilot, the neural network being retrained during a training course from its inertial condition to a condition with altered weights, the behaviour approximating the behaviour of a real, human pilot, as well as
(b) an adaptive knowledge and data bank with rules, which
- stores rules in a memory, which code the behaviour of a pilot as a response to sensor signals from the independent sensor means in an if - then form,
- the rules being provided with weights which reflect the importance of the rules for the behaviour of the pilot.
(c) means are provided for the application of the sensor signals from the independent sensor means to the knowledge and data bank,
(d) means for the alteration of the weights of the knowledge and data bank in a step-by-step manner dependent on alterations of the weights of the neural network relative to its initial condition, and
(e) evaluation means for the generation of a measure of the flight ability of the pilot from the altered weights of the rules in the knowledge and data bank.

8. Monitoring device according to claim 7, **characterised in that,** the adaptive knowledge and data bank is an associative memory operating with fuzzy logic.

9. Monitoring device according to claim 7, **characterised by** a computer model (84) of the flight dynamics, the commands given by the pilot being applied to the aircraft as well as to the model, the computer model (84) providing estimated quantities of the conditions of the aircraft, the estimated quantities of the conditions of the aircraft also being applied to the evaluation means.

10. Monitoring device according to claim 9, **characterised in that,** the computer model (84) is formed by a neural network which is trained using the commands given by the pilot and measured quantities of conditions of the aircraft.

11. Monitoring device according to one of the claims 1 to 11, **characterised in that,** the monitoring component (24) and the aircraft-independent sensor means (26,28,30) are accommodated in an external container (25) mounted on the aircraft (56).

## Revendications

1. Dispositif de surveillance destiné à surveiller la sécurité en vol d'un avion pourvu de capteurs propres à l'avion destinés à mesurer des données d'avion, comprenant
(a) un sous-groupe de surveillance (24) pourvu d'un instrument technique et devant être fixé à l'avion,
(b) l'instrument technique comprenant des moyens de capteur (26,28,30) destinés à mesurer des données d'avion indépendamment des capteurs propres à l'avion,
(c) des moyens (36,38) destinés à surveiller automatiquement la fonction de l'instrument technique du sous-groupe de surveillance (24) et
(d) des moyens (72,80) destinés à surveiller automatiquement les réactions du pilote (64) à l'aide des données d'avion livrées par les moyens de capteur (26,28,30) indépendants et à l'aide d'informations sur les réactions du pilote obtenues par l'intermédiaire du bus de données d'avion, ces moyens de surveillance des réactions (72,80) étant également disposés dans le sous-groupe de surveillance (24).

2. Dispositif de surveillance selon la revendication 1, **caractérisé par le fait que** le sous-groupe de surveillance (24) comprend des moyens d'avertissement auxquels sont appliquées des données d'avion des capteurs indépendants, qui répondent à des écarts de l'avion par rapport au domaine des états de vol sûrs et qui déclenchent un signal d'avertissement.

3. Dispositif de surveillance selon la revendication 1 ou 2, **caractérisé par le fait que** le sous-groupe de surveillance comprend des moyens d'avertissement d'un contact avec le sol auxquels sont appliquées des données d'avion des capteurs indépendants, qui répondent à une approche inadmissible de l'avion du sol et qui déclenchent un signal d'avertissement.

4. Dispositif de surveillance selon l'une des revendications 1 à 3, **caractérisé par le fait que** le sous-groupe de surveillance (24) comprend des moyens d'avertissement d'une collision qui répondent au danger de collision avec d'autres avions et qui déclenchent un signal d'avertissement.

5. Dispositif de surveillance selon l'une des revendications 1 à 6, **caractérisé par le fait que** les moyens destinés à surveiller l'instrument technique comprennent un réseau neuronal associatif (36) muni d'entrées et de sorties ainsi qu'un système expert (38) appliqué après celui-ci basé sur des règles qui livre, en tant qu'informations de départ, des informations sur la situation et une décision concernant les mesures à prendre.

6. Dispositif de surveillance selon la revendication 5, **caractérisé par le fait que** le système expert (38) basé sur des règles est une mémoire associative opérant avec une logique imprécise.

7. Dispositif de surveillance selon l'une des revendications 1 à 6, **caractérisé par le fait que** les moyens (64) destinés à surveiller les réactions du pilote
(a) comprennent un réseau neuronal muni de charges qui
- a été entraîné dans un état inertiel afin de générer un modèle de comportement d'un pilote moyen en tant que réaction à des signaux de capteurs, et
- reçoit des signaux de capteur des moyens de capteur indépendants traduisant l'état de l'avion en service ainsi que des signaux traduisant les réactions d'un vrai pilote humain, le réseau neuronal étant réentraîné pendant le déroulement d'un entraînement pour passer de son état inertiel à un état muni de charges modifiées, son comportement se rapprochant du comportement du vrai pilote humain, ainsi que
(b) une banque de données et de savoir adaptative munie de règles qui
- mémorisent dans une mémoire des règles codifiant sous forme de "si condition(s), alors action(s)" le comportement d'un pilote en tant que réponse à des signaux de capteur des moyens de capteur indépendants,
- les règles étant pourvues de charges qui traduisent l'importance des règles pour le comportement du pilote,
(c) des moyens destinés à appliquer les signaux de capteur des moyens de capteur indépendants à la banque de données et de savoir,
(d) des moyens destinés à modifier les charges de la banque de données et de savoir peu à peu en fonction de modifications des charges du réseau neuronal par rapport à son état inertiel, et
(e) des moyens d'évaluation destinés à générer une mesure de la capacité à piloter du piloter à partir des charges modifiées des règles contenues dans la banque de données et de savoir.

8. Dispositif de surveillance selon la revendication 7, **caractérisé par le fait que** le banque de données et de savoir est une mémoire associative opérant avec une logique imprécise.

9. Dispositif de surveillance selon la revendication 7, **caractérisé par** un modèle calculateur (84) de la dynamique de l'avion, des ordres donnés par le pilote étant appliqués aussi bien à l'avion qu'au modèle, le modèle calculateur (84) livrant des grandeurs d'état d'estimation de l'avion ; les grandeurs d'état d'estimation de l'avion étant également appliquées aux moyens d'évaluation.

10. Dispositif de surveillance selon la revendication 9, **caractérisé par le fait que** le modèle calculateur (84) est formé par un réseau neuronal qui est entraîné à l'aide des ordres donnés par le pilote et des grandeurs d'état mesurées de l'avion.

11. Dispositif de surveillance selon l'une des revendications 1 à 11, **caractérisé par le fait que** le sous-groupe de surveillance (24) et les moyens de capteur indépendants de l'avion (26,28,30) sont logés dans un caisson (25) placé à l'extérieur de l'avion (56).
